Europäisches Patentamt

European Patent Office

Office européen des brevets

(11) Veröffentlichungsnummer: **0 179 322**
**B1**

## (12) EUROPÄISCHE PATENTSCHRIFT

(45) Veröffentlichungstag der Patentschrift: 23.05.90

(21) Anmeldenummer: 85112482.6

(22) Anmeldetag: 02.10.85

(51) Int. Cl.⁵: **B 01 J 38/02**, B 01 J 8/06 // C07C5/333

(54) Verfahren zum Regenerieren eines Katalysators.

(30) Priorität: 25.10.84 DE 3439166

(43) Veröffentlichungstag der Anmeldung:
30.04.86 Patentblatt 86/18

(45) Bekanntmachung des Hinweises auf die
Patenterteilung:
23.05.90 Patentblatt 90/21

(84) Benannte Vertragsstaaten:
AT BE DE FR GB IT NL

(56) Entgegenhaltungen:
EP-A-0 135 357
GB-A-2 001 545

(73) Patentinhaber: Linde Aktiengesellschaft
Abraham-Lincoln-Strasse 21
D-6200 Wiesbaden (DE)

(72) Erfinder: Lang, Udo, Dipl.-Ing.
Springerstrasse 35
D-8000 München 71 (DE)
Erfinder: Merz, Gerhard, Dr.-Ing.
Lindenstrasse 8
D-8021 Baierbrunn (DE)
Erfinder: Hofmann, Karl-Heinz, Dr.-Ing.
Tulpenstrasse 71
D-8034 Germering (DE)

(74) Vertreter: Schaefer, Gerhard, Dr.
Linde Aktiengesellschaft Zentrale
Patentabteilung
D-8023 Höllriegelskreuth (DE)

Courier Press, Leamington Spa, England.

**Beschreibung**

Die Erfindung betrifft ein Verfahren zum exothermen Regenerieren eines in einem Reaktor, der mit einem Brenner ausgestattet ist, angeordneten Katalysators, der während einer endothermen katalytischen Umsetzung innerhalb eines diskontinuierlichen Verfahrens desaktiviert worden ist.

Um die für eine endotherme katalytische Umsetzung erforderlichen Temperaturen in einem Reaktor aufrecht zu erhalten, ist dieser üblicherweise mit einem oder mehreren Brennern versehen. Während der katalytischen Reaktion entstehen normalerweise Nebenprodukte, wie z.B. Kohlenstoff, die sich auf dem Katalysator niederschlagen und diesen desaktivieren. Aus diesem Grunde muß der Katalysator regeneriert werden. Hierzu wird in einem diskontinuierlichen Verfahren die Zufuhr von Einsatz stoffen unterbrochen und—im Falle von Koksablagerungen—beispielsweise ein oxidierendes Gas über den Katalysator geleitet, um diese Nebenprodukte zu entfernen. Dabei wird Wärme frei, die abgeführt werden muß.

Üblicherweise werden bislang die Brenner ohne Lastwechsel über die verschiedenen Reaktionstakte hinweg (katalytische Reaktion, Regenerierung) betrieben. Dies bedeutet, insbesondere, da die Regenerierung an sich einen exothermen Vorgang darstellt, einen unnötigen Verbrauch an Heizmedium während des Regeneriervorgangs.

Es wurde nun bereits gemäß der EP—A—0 135 357, welche als Stand der Technik im Sinne von Art 54(3) EPÜ gilt, vorgeschlagen, einen Multiröhrenreaktor zu verwenden, dessen Röhren mit einem Katalysator gefüllt sind und dessen Feuerraum in mehrere getrennte Zonen unterteilt ist, wobei jede einzelne Zone jeweils mit einem regelbaren Brennersystem ausgestattet ist.

Beim Betreiben dieses Reaktors durchläuft jede einzelne Zone abwechselnd eine endotherme Prozeßphase, in welcher der Katalysator desaktiviert wird, und eine exotherme Regenerationsphase, in welche der Katalysator wieder aktiviert wird. In der Regenerationsphase wird die Brennerleistung durch Verringern der Brennstoffzufuhr reduziert.

Der Erfindung liegt daher die Aufgabe zugrunde, die exotherme Regenerierung von Katalysatoren innerhalb diskontinuierlicher Verfahren so zu verbessern, daß eine Reduzierung der Betriebsmittelmengen erreicht wird.

Diese Aufgabe wird erfindungsgemäß dadurch gelöst, daß die Brennerleistung auf weniger als 50%, vorzugsweise 0—10%, der ursprünglichen Brennerleistung reduziert wird. Die auf die Rohre einwirkende Heizleistung wird zweckmäßigerweise durch Verringerung der Zufuhr von Heizmittel reduziert. Dabei wird die Zufuhr der Verbrennungsluft nicht im gleichen Maß verringert wie die Heizmittelzufuhr. Wird ein Mindestwärmeeinfall am Reaktionsrohr erwünscht, wird die Zufuhr von Verbrennungsluft reduziert, bevorzugt auf 10 bis 50% des ursprünglichen Wertes.

Mit dem erfindungsgemäßen Verfahren wird neben dem reduzierten Wärmeeinfall auch eine erhebliche Einsparung an Heizmedium sowie an Verbrennungsluft erreicht. Als Folge hiervon kann eine kleineres Verbrennungsluftgebläse eingesetzt werden. Weiterhin verringern sich die Verluste an Abhitze und das Abhitzesystem kann kleiner vorgesehen werden.

Bei Verwendung mehrerer Reaktoren, die im Wechsel betrieben werden, erfolgt insgesamt keine Änderung der zugeführten Heizmittel und Verbrennungsluftströme sowie keine Lastwechsel im Abhitzesystem, da nur von einem Brenner auf den nächsten die Laständerung stattfindet.

Die erfindungsgemäße Verfahrensweise ist anwendbar bei der exothermen Regenerierung aller Katalysatoren in einem diskontinuierlichen Verfahren, die während der katalytischen Umsetzung desaktiviert worden sind. Als Beispiele hierfür seien genannt Katalysatoren, die während einer endothermen Dehydrierung, beispielsweise von i-Butan, n-Butan oder Gemischen hiervon, desaktiviert wurden.

Im folgenden ist ein Gesamtverfahren zur Dehydrierung von i-Butan mit drei Reaktoren anhand eines Taktschemas erklärt, mit dem klar wird, daß insgesamt keine Änderung der zugeführten Heizmittel und Verbrennungsluft erfolgt.

In dem Taktschema ist auf der Abszisse die Zeit in Stunden und auf der Ordinate der jeweilige Réaktor 1, 2 und 3 aufgetragen. Die Momentanaufnahme sei anhand des Reaktors 1 erläutert.

Während 6 Stunden findet an dem Reaktor 1 bei einer Temperatur zwischen 450°C—700°C, vorzugsweise 500°C—640°C, einem Druck zwischen 0,5 bar und 6 bar und einem Durchsatz GHSV zwischen 150 und 1500 $Nm^3$ i-Butan pro $m^3$ Katalysator, Stunde die Dehydrierung von i-Butan gemäß

$$C_4H_{10} \rightleftharpoons C_4H_8 + H_2 + \Delta H$$

$$\Delta H = 177 \text{ kJ/mol}$$

statt. Dabei entstehen C-Ablagerungen, die sich auf dem Katalysator niederschlagen und diesen desaktivieren. Aus diesem Grunde wird der Katalysator nach Abschalten der Einsatzzufuhr regeneriert. Hierzu wird der Katalysator z.B. bis zu 15 Minuten lang mit einem Spülgas, z.B. $N_2$, von Restgasen, d.h. $H_2$ und Kohlenwasserstoffen, freigespült und dann für die Dauer der Regenerierung mit einem oxidierenden Gas, z.B. Luft oder Rauchgas, beaufschlagt. Der im Gas enthaltene Sauerstoff reagiert mit dem abgelagerten Koks unter Wärmeabgabe zu $CO_2$. Um Spuren von Rest-$O_2$ und noch vorhandenem $CO_2$ zu entfernen und den Katalysator zu reaktivieren, wird dieser bis zu 15 Minuten mit $N_2$ und anschließend mit Einsatz beaufschlagt und steht somit nach der Regenerierung erneut für einen Dehydriertakt zur Verfügung. Während der Regenerierung wird erfindungsgemäß die Brennerleistung auf weniger als 50% reduziert, so daß hiermit im Vergleich zu herkömmlichen Verfahren der Wärmeeinfall über die Heizrohre reduziert und eine Einsparung von Heizmittel und Verbrennungsluft und damit Gebläseenergie erreicht wird.

Die beschriebenen Takte durchlaufen alle Reaktoren, jedoch zeitverschoben, wie aus dem Taktschema hervorgeht. Bemerkenswert ist dabei, daß sich gleichzeitig immer zwei Reaktoren im Dehydriertakt befinden und somit keine Lastwechsel im Abhitzesystem auftreten, da die Laständerung grundsätzlich nur von einem Reaktor mit seinen Brennern auf den nächsten erfoglt.

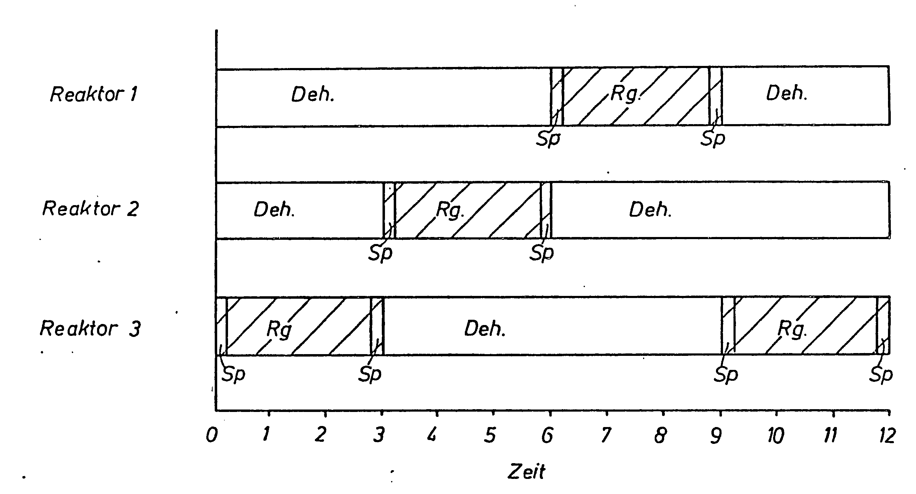

## Patentansprüche

1. Verfahren zum exothermen Regenerieren eines in einem Reaktor, der mit einem Brenner ausgestattet ist, angeordneten Katalysators, der während einer endothermen katalytischen Umsetzung innerhalb eines diskontinuierlichen Verfahrens desaktiviert worden ist, wobei die Brennerleistung während des Regenerierens reduziert, wird, dadurch gekennzeichnet, daß die Brennerleistung auf weniger als 50% des ursprünglichen Wertes reduziert wird.

2. Verfahren nach Anspruch 1, dadurch gekennzeichnet, daß die Luftzufuhr auf 10 bis 50% des ursprünglichen Wertes gesenkt wird.

## Revendications

1. Procédé de régénération exothermique d'un catalyseur disposé dans un réacteur équipé d'un brûleur, lequel catalyseur a été désactivé par une réaction catalytique endothermique au cours d'un procédé opérant en discontinu, la puissance du brûleur étant réduite pendant la régénération de façon telle que la puissance du brûleur se trouve ramenée à moins de 50% de la valeur initiale.

2. Procédé selon la revendication 1, caractérisé par le fait que l'alimentation en air est réduite pour atteindre une valeur de 10 à 50% de la valeur initiale.

## Claims

1. A method for the exothermic regeneration of a catalyst which is arranged in a reactor equipped with a burner and which has been deactivated during an endothermic catalytic conversion in a discontinuous process, where the burner power is reduced during the regeneration, characterised in that the burner power is reduced to less than 50% of the original value.

2. A method as claimed in Claim 1, characterised in that the supply of air is reduced to 10 to 50% of the original value.

Reaktor 1 — Deh. — Rg. — Deh. — Sp — Sp

Reaktor 2 — Deh. — Rg. — Deh. — Sp — Sp

Reaktor 3 — Rg — Deh. — Rg. — Sp — Sp — Sp — Sp

Zeit

0 1 2 3 4 5 6 7 8 9 10 11 12

EP 0 179 322 B1